# EUROPEAN PATENT APPLICATION

(11) **EP 4 506 050 A1**
(43) Date of publication of application: **12.02.2025**
(21) Application number: 24192970.2
(22) Date of filing: 05.08.2024
(51) Int. Cl.: B01D 29/11, B01D 29/88, B01D 35/30, B01D 46/00, B01D 46/24

(54) **COMPOSITE STRUCTURE FOR LIQUID FILTRATION DEVICE**

(30) Priority: 08.08.2023 US 202363531423 P; 16.02.2024 US 202463554619 P; 22.07.2024 US 202418779351
(71) Applicant: Baldwin Filters, Inc., Cleveland, OH 44124 (US)
(72) Inventor: REES, Evan R., Muscatine, 52761 (US); KRULL, Timothy L., Kearney, 68845 (US)
(74) Representative: Murgitroyd & Company

(57) **Abstract**

A filter assembly that includes a housing and filter media disposed within the housing. A top end cap has an annular end plate attached to a top end of the filter media, and an axially-extending center tube. The top end cap has a first opening configured to allow a flow of fluid into the housing, and has a second opening that provides a means for discharge of the flow of fluid from the housing.

## Description

### CROSS-REFERENCE TO RELATED PATENT APPLICATIONS

This patent application claims the benefit of U.S. Provisional Patent Application No. 63/554,619, filed February 16, 2024, and claims the benefit of U.S. Provisional Patent Application No. 63/531,423, filed August 8, 2023, the entire teachings and disclosures of which are incorporated herein by reference thereto.

### FIELD OF THE INVENTION

This invention generally relates to fuel filters and fuel filter cartridges.

### BACKGROUND OF THE INVENTION

Fuel filters are found in a variety of motor vehicles and machines powered by combustion engines. These filters are effective in separating out various contaminants from the fuel. These contaminants include, but are not limited to solid particles, and undesirable liquids such as water, for example. The filter removes these contaminants from the fuel before it enters the internal combustion engine. In this way, the fuel filter prevents damage to the combustion engine and improves performance. Various types of fluid filters are known and used in a number of vehicle and engine systems where fuel filtration is required. Fuel filters require periodic replacement as the filtration media becomes ineffective after prolonged use. As such, fuel filters may be designed to facilitate removal and installation. A fuel filter cartridge is disclosed in U.S. Patent No. 9,211,488 and in U.S. Patent No. 10,213,715, the entire disclosures of which are incorporated herein by reference thereto.

Embodiments of the invention provide improvements to the state of the art in fuel filter assemblies. These and other advantages of the invention, as well as additional inventive features, will be apparent from the description of the invention provided herein.

### BRIEF SUMMARY OF THE INVENTION

Embodiments of the invention described herein allow for an unfiltered fluid to enter through one or more openings in the peripheral region of the top end cap, proceed down flow channels located inside the walls of the housing unit, pass radially inward through the filtration media, and then exit through an opening in the central region of the end cap.

In the aforementioned U.S. Patent Nos. 9,211,488 and 10,213,715, a hollow stem is formed unitary with the top housing cover and includes internal structure that defines the inlet and outlet flow channels into the fluid filtration device.

As illustrated in the following description and in the accompanying drawings, a fuel filtration device is provided that includes an annular outer housing, consisting of a top and bottom housing cover, and a filter element located within the housing. The filter element includes an end cap assembly including an upper end cap attached to the upper end of the media ring, and a center tube projecting upward from the end cap that is received within a hollow stem of the top cover. Both the center tube and the stem have a cooperating structure that defines the inlet and outlet flow paths into the fluid filtration device. In particular embodiments, a two-piece end cap assembly and stem may be easier and less costly to manufacture than a single-piece, unitary stem design.

According to one embodiment, the center tube extends upwardly from the upper end cap and includes an annular disk along the length of the tube that supports an O-ring seal around the periphery of the disk between the center tube and the outer stem of the filtration device. An end wall, which is circular in some embodiments, is provided at the distal end of the tube, which also supports an O-ring seal around the periphery of the wall, between the wall and the stem. The O-ring seals seal against the inner wall surface of the stem. An axial opening is provided through the end wall at the end of the center tube, along and internal to the wall of the tube, and through the disk, to provide an inlet flow path from the end of the stem into the fluid filtration device.

A radial flow opening is provided along the side of the stem, and in the side of the center tube between the two O-rings, and in an area separate from the axial inlet flow path, for directing flow out of the fluid filtration device.

The inlet and outlet flow paths are thereby fluidly separate, for directing fluid into and out of the fluid filtration unit. In alternate embodiments of the invention, the filter element, including the center tube with disk and the end wall, is removable from the stem of the top housing cover, when it is desired to replace the element when spent.

Applications for the fuel filtration device disclosed herein include, but are not limited to, all-wheel steer loaders, excavators, loaders, track loaders, versahandlers, and work machines.

In one aspect, the invention provides a filter assembly that includes a housing and filter media disposed within the housing. A top end cap has an annular end plate attached to a top end of the filter media, and an axially-extending center tube. The top end cap has a first opening configured to allow a flow of fluid into the housing, and has a second opening that provides a means for discharge of the flow of fluid from the housing.

In a particular embodiment, the second opening is formed in the center tube. In a further embodiment, the housing has an opening aligned with the second opening in the center tube. Furthermore, the second opening and the housing opening may be of the same size and shape. In certain embodiments, the first opening is formed in an end wall which extends radially across a cross-section of the center tube. The end wall may be arranged perpendicularly to a longitudinal axis of the center tube and filter assembly.

In other embodiments, the first opening is arcuate in shape. In more particular embodiments, an edge of the first opening is bounded by an inner surface of the center tube. In a further embodiment, the top end cap includes a first annular sealing disk attached to the center tube, and extending radially from the center tube, the first annular sealing disk spaced axially from the annular end plate. In certain embodiments, the first annular sealing disk has a smaller diameter than the annular end plate. In a particular embodiment, the top end cap includes a second annular sealing disk attached to the center tube, and extending radially from the center tube, the second annular sealing disk spaced axially from the first annular sealing disk and from the annular end plate.

In some embodiments, the second annular sealing disk has a smaller diameter than the first annular sealing disk, which has a smaller diameter than the annular end plate. The first annular sealing disk and the second annular sealing disk may each be configured to seal against an inner surface of the housing. Additionally, the first annular sealing disk and the second annular sealing disk may each have an O-ring channel configured to seat an O-ring.

In certain embodiments, the housing is cylindrical with a main cylindrical portion having a first diameter, and a second cylindrical portion has a second diameter smaller than the first diameter. In particular embodiments, the housing has a third cylindrical portion having a third diameter smaller than the second diameter, and the second cylindrical portion is situated between the main cylindrical portion and the third cylindrical portion.

Embodiments of the filter assembly may also include a bottom cover attached to an open end of the housing opposite an end of the housing in which the top end cap is assembled. The top end cap may be configured such that the flow of fluid into the first opening is kept separate from the flow of fluid discharged from the second opening. Additionally, the two flow channels are separate from the outer housing, which is just a shell for the filter assembly.

In a further embodiment, the top end cap has an upper portion and a separate lower portion configured to be assembled into a single unit. This assembly could take place either before or after the top end cap is assembled into the housing. In a particular embodiment, the upper portion includes an upper center tube, a first annular sealing disk attached to the upper center tube, and a second annular sealing disk axially offset from the first annular sealing disk, and also attached to the upper center tube. The lower portion has a lower center tube that extends into an interior region of the filter media, and an annular end plate attached to an end of the filter media.

In an alternate embodiment, the top end cap has an annular radially-outward-extending projection, which is formed around an outside perimeter surface of a first annular sealing disk, the first annular sealing disk being attached to the center tube, and extending radially from the center tube, the first annular sealing disk spaced axially from the annular end plate, and an interior surface of the housing has an annular, radially-extending groove, the projection being configured to snap into the groove to limit axial movement of the top end cap within the housing.

In another embodiment, the top end cap has an annular sealing disk attached to the center tube, and extending radially from the center tube, the annular sealing disk having an angled, notched portion, and a portion of the housing that abuts the annular sealing disk has an angled portion configured to fit within the angled, notched portion to prevent rotation movement of the top end cap within the housing.

In another aspect, embodiments of the invention include a filter element for a fluid filtration device. The filter element includes a ring of media, and an end cap assembly. The end cap assembly includes an annular end cap attached to an end of the ring of media. A center tube extends outwardly, away from the end cap. The center tube has an annular sealing disk surrounding a portion of the center tube along the length of the tube, and a circular end wall at a distal end of the center tube, projecting radially outwardly from the tube. The center tube includes an axial opening extending from the distal end of the tube, through the circular end wall, through a wall of the center tube and through the sealing disk, and also includes a radial opening through the center tube between the end wall and the sealing disk, fluidly separate from the axial opening.

Embodiments of the filter elements also include a first O-ring seal carried by the sealing disk and surrounding an outer peripheral edge of the sealing disk, and a second O-ring seal carried by the end wall and surrounding an outer peripheral edge of the end wall. The filter assembly may include housing covers that define an outer housing, with one of the housing covers including a hollow stem with a first opening at a distal end of the stem, and a second opening along the length of the stem, and the aforementioned filter element. The center tube of the filter element is received within the stem of the one of the housing covers, with the O-ring seals of the disk and the end wall sealing against an inner wall surface of the stem and defining a first, inlet flow path into the outer housing through the axial opening, and a second flow path out of the housing through the radial opening.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a cross-sectional view of a filter assembly, according to an embodiment of the invention;
FIG. 2 is a cross-sectional view of a housing used in the filter assembly of FIG. 1, according to an embodiment of the invention;
FIG. 3 is a perspective view of the housing of FIG. 2, in accordance with an embodiment of the invention; and
FIG. 4 is a cross-sectional view of a top end cap used in the filter assembly of FIG. 1, according to an embodiment of the invention;
FIG. 5 is a perspective view of the top end cap of FIG. 4, in accordance with an embodiment of the invention;
FIG. 6 is a perspective view of a bottom housing cover used in the filter assembly of FIG. 1, according to an embodiment of the invention;
FIG. 7 is a cross-sectional view of the bottom housing cover of FIG. 6, in accordance with an embodiment of the invention;
FIG. 8 is a cross-sectional view of a filter element showing the movement of fluid through the filter element, in accordance with an embodiment of the invention;
FIG. 9 is a cross-sectional view of an upper portion of the filter assembly, according to an embodiment of the invention;
FIG. 10 is an enlarged cross-sectional view showing a part of the filter assembly from FIG. 9; and
FIG. 11 is a cross-sectional view of the filter assembly illustrating a keying feature, in accordance with an embodiment of the invention.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

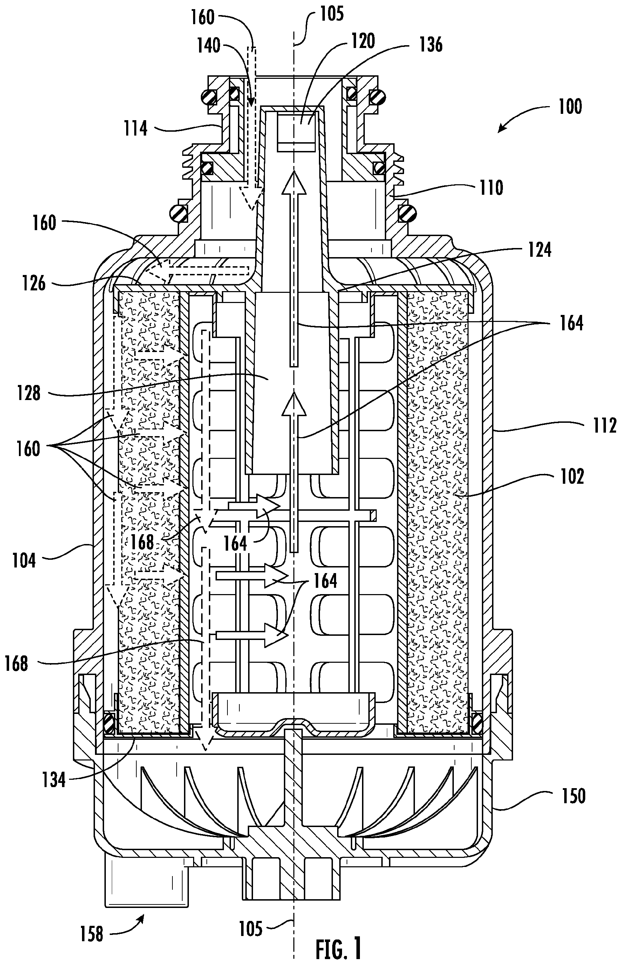

FIG. 1 shows a cross-sectional view of a filter assembly 100, according to an embodiment of the invention. The filter assembly 100 includes filter media 102 disposed in a housing 104. In the embodiments shown, the filter media 102 and housing 104 are cylindrical with a longitudinal axis 105, though shapes other than cylindrical are possible for the filter media 102 and housing 104. As used herein, the term "axially" refers to anything that extends along or parallel to longitudinal axis 105.

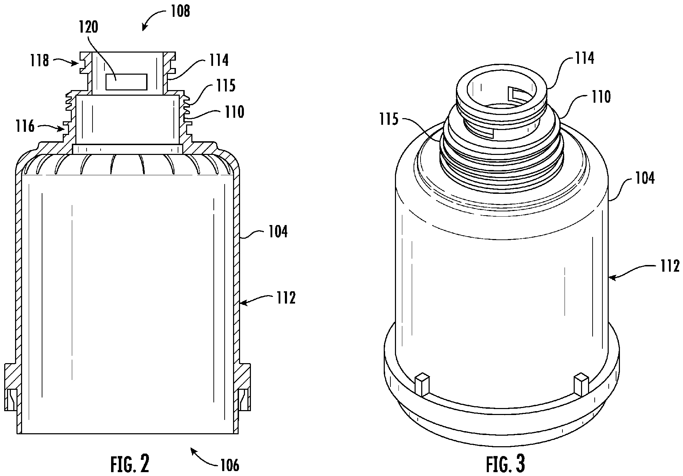

FIGS. 2 and 3 show a cross-sectional view and a perspective view, respectively, of the housing 104. The housing 104 has a main cylindrical portion 112, a second cylindrical portion 110, and a third cylindrical portion 114. As shown, the bottom of housing 104 has a large open end 106, while the top of housing 104 has a narrow opening 108. In the embodiments shown, a top end of the housing 104 includes the second cylindrical portion 110, which is narrower than the main cylindrical body 112 of the housing 104. The second cylindrical portion 110 extends axially from the main cylindrical portion 112. The third cylindrical portion 114, narrower than the second cylindrical portion 110, extends axially from the second cylindrical portion 110 such that the second cylindrical portion 110 is between the main cylindrical body 112 and the third cylindrical portion 114.

In certain embodiments, the second cylindrical portion 110 has a first channel 116, and the third cylindrical portion 114 has a second channel 118, the first and second channels 116, 118 each configured to seat an O-ring. The outer surface of the second cylindrical portion 110 may be threaded, the threads 115 configured to facilitate attachment of the filter assembly 100 to a vehicle or machine. A cylindrical wall of the third cylindrical portion 114 includes a first opening 120 to facilitate a flow of liquid out from inside the housing 104. The first opening 120 shown in FIG. 2 is rectangular, but the first opening 120 is not limited to that shape.

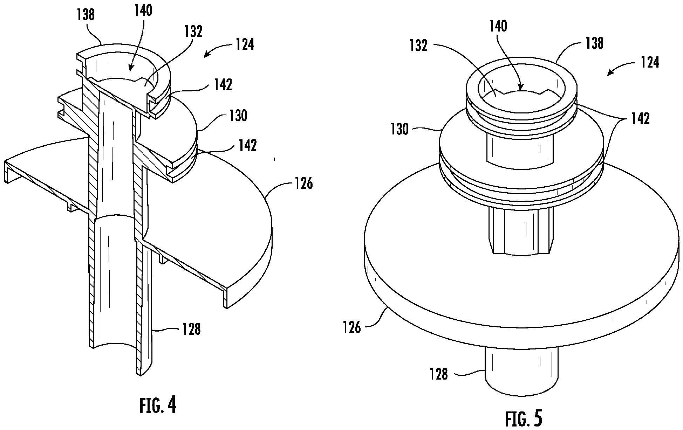

Referring again to FIG. 1, a top end cap 124 is disposed within the housing 104. FIGS. 4 and 5 show a cross-sectional view and a perspective view, respectively, of a top end cap 124, according to an embodiment of the invention. The top end cap 124 includes an annular end plate 126 attached to a top end of the filter media 102. In a typical configuration, a separate bottom end cap 134 is attached to a bottom end of the filter media 102. The bottom end cap 134 may include an O-ring channel to seat an O-ring. The top end cap 124 has a center tube 128 extending axially through a central portion of the filter assembly 100.

The annular end plate 126 is attached to the center tube 128 and extends radially outward from the center tube 128. In the embodiment shown, the annular end plate 126 is perpendicular, or nearly perpendicular, to the center tube 128 and the longitudinal axis 105. The center tube 128 includes a first annular sealing disk 130 surrounding a portion of the center tube 128 along a length thereof. The center tube 128 also has an end wall 132, which is circular in some embodiments though other shapes are envisioned, at a distal end of the center tube 128.

In the embodiment shown, the end wall 132, projects or extends radially across a cross-section of the center tube 128, normal or perpendicular to the longitudinal axis 105 and, in some embodiments, extends radially outward from an outer wall of the center tube 128. Above the end wall 132, there is a second annular sealing disk 138, smaller in diameter than the first annular sealing disk 130. As it extends radially outward from the outer wall of the center tube 128, the end wall 132 may also constitute a bottom surface portion of the second annular sealing disk 138. In some embodiments such as FIG. 1, the first annular sealing disk 130 and second annular sealing disk 138 each have an O-ring channel 142 to seat an O-ring to provide a fluid-tight seal between the top end cap 124 and an inner surface of the housing 104.

As can be seen from FIG. 1, the center tube 128 further includes a second opening 136 in a portion of a center tube cylindrical wall located between the first annular sealing disk 130 and the end wall 132. The second opening 136 allows for a radial flow of fluid from inside the center tube 128 to outside of the filter assembly 100. When the top end cap 124 is assembled in the housing 104, the second opening 136 is aligned with the first opening 120. In FIG. 1, the second opening 136 is rectangular, but other shapes are envisioned for this opening 136. In particular embodiments, the first opening 120 and second opening 136 are of the same size and shape. Additionally, there is an opening 140 through the end wall 132 to facilitate an axial flow of fluid into the filter assembly housing 104. The end wall opening 140 may take a variety of shapes that allow for the axial flow of fluid through the end wall 132.

In certain embodiments, the end wall opening 140 is arcuate in shape. In a more particular embodiment, the radially outward edge of the arcuate end wall opening 140 is bounded or defined by an inner surface of the center tube 128. It should be noted that the axial fluid flow through opening 140 in the end wall 132 is separate from the radial fluid flow through the second opening 136 in the center tube 128 of the top end cap 124. It should also be noted that the two flow channels, i.e., through opening 140 and through the second opening 136, are determined by the top end cap 124, and thus separate from the housing 104. In the present invention, the housing 104 functions only as a shell for the filter assembly 100.

It should also be recognized that the top end cap 124 can be made as a single piece, for example, machined or molded in its entirety as one part. In other embodiments, the top end cap 124 can be a composite, multi-part structure made as separate pieces which are then assembled together. By creating a composite multi-part assembly, the top end cap 124 can be fabricated using materials and manufacturing processes that are more cost-effective and manufacturing-friendly than those used to make a single-piece structure. For example, the composite top end cap 124 may take advantage of simplified molding processes and lower-cost materials. More specifically, the composite top end cap 124 may use lower-cost plastics for some parts that do not require more expensive, highly-engineered plastics.

In a particular embodiment, the top end cap 124 has a lower portion that includes annular end plate 126 and the portion of the center tube 128 that extends into a central interior region of the filter media 102. An upper portion of the top end cap 124 includes the first and second annular sealing disks 130, 138, and that part of the center tube 128 which projects upward from the annular end plate 126 and which is received within a hollow stem at the upper end of the housing 104. Both the center tube 128 and the aforementioned stem of housing 104 have a cooperating structure that defines the inlet and outlet flow paths into the filter assembly 100.

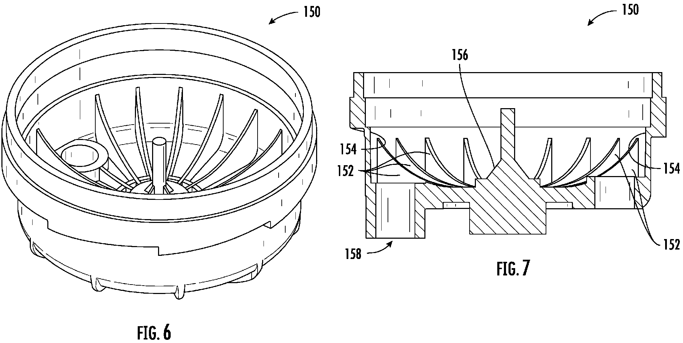

FIG. 6 is a perspective view of a bottom housing cover 150 used in the filter assembly 100, while FIG. 7 is a cross-sectional view of the bottom housing cover 150, according to an embodiment of the invention. As shown in FIG. 1, the bottom housing cover 150 attaches to a bottom end of housing 104. In the embodiments shown, the bottom housing cover 150 is cup-shaped with a plurality of ribs 152 spaced at regular intervals around an interior of the bottom housing cover 150. In particular embodiments, each of the plurality of ribs 152, extends from a central hub 156 to an interior perimeter wall 154 of the bottom housing cover 150. The bottom housing cover 150 also includes a drain 158.

In typical embodiments, the bottom housing cover 150 is welded (e.g., ultrasonic or spin welding) to the housing 104. In alternate embodiments, the attachment between the bottom housing cover 150 and housing 104 may be a threaded/screw-on attachment, or a snap-on attachment. In the embodiment shown, in attaching the bottom housing cover 150 to the housing 104, a seal is created between the bottom housing cover 150 and an O-ring on the bottom end plate 134. The aforementioned drain 158 allows any fluid that gets past the seal into the bottom housing cover 150 to flow out of the filter assembly 100.

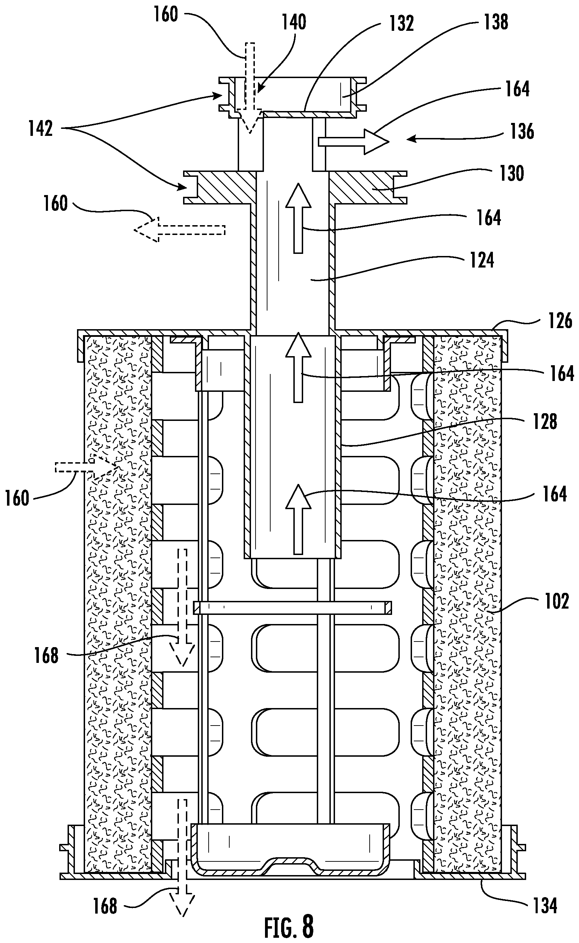

FIG. 8 is a cross-sectional view of a filter element incorporated in the filter assembly 100 which illustrates how fluid flows through the assembly 100, in accordance with an embodiment of the invention. The arrows 160 shown in FIG. 8 and also in FIG. 1 show where dirty fuel enters the filter assembly 100 through the opening 140 in the end wall 132. The dirty fuel flows down then radially outward toward the inner wall of the housing 104. As shown by the arrows 160, the dirty fuel surrounds the outer walls of the filter media 102, and flows inward through the filter media 102 toward the center of the housing 104. Passing through the filter media 102 cleans the fuel. The flow of clean fuel, shown by arrows 164, then flows up through center tube 128 and out of the filter assembly through openings 136 and 120.

Water entrained in the fuel flow coalesces on an inner surface of the filter media 102. Being heavier than the fuel, the water falls to the bottom of the filter assembly 100, as shown by arrows 168 in FIGS. 1 and 8. As can be seen in these drawings, the water drains through the bottom end cap 134 and into the bottom housing cover 150, which has the drain 158 for allowing the water to drain out of the filter assembly 100.

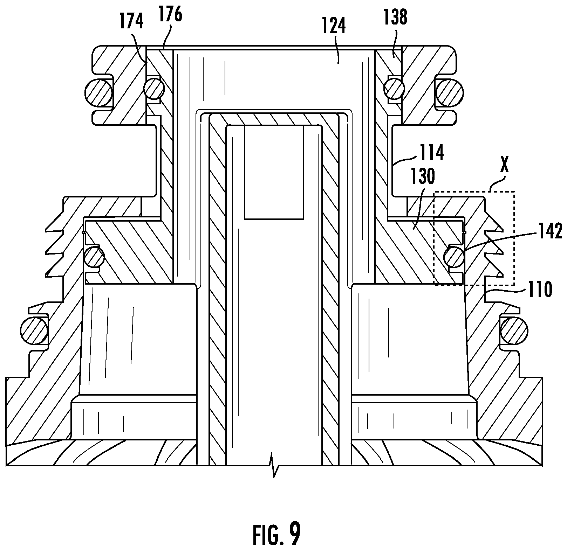

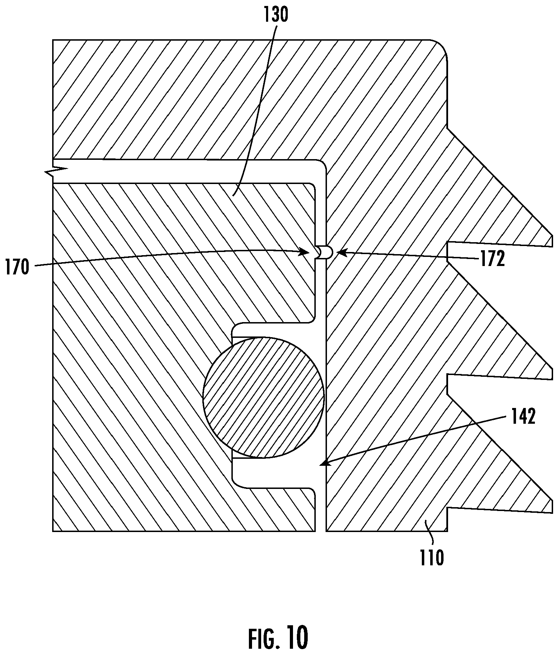

FIG. 9 is a cross-sectional view of an upper portion of the filter assembly 100, according to another embodiment of the invention. FIG. 10 is an enlarged cross-sectional view showing a part of the filter assembly 100 from FIG. 9. FIGS. 9 and 10 show an embodiments in which the top end cap 124 and housing 104 include a snap feature to limit axial, or vertical, movement of the top end cap 124 within the housing 104. The snap feature is achieved by a projection 170 on the top end cap 124 which is designed to fit within a groove 172 formed in the housing. As shown in FIGS. 9 and 10, the projection 170 is an annular radially-outward-extending projection, being formed around an outside perimeter surface of the first annular sealing disk 130.

In the embodiment shown, the projection 170 is formed on the first annular sealing disk 130 above the lowermost O-ring channel 142. When the top end cap 124 is assembled into housing 104, the projection 170 snaps into the groove 172 formed around an interior surface of the housing 104 near the top of the main cylindrical portion 112 just below the second cylindrical portion 110. With the projection 170 seated in the groove 172, the top end cap 124 is prevented from moving axially, or vertically, within the housing 104. It is envisioned that alternate embodiments of the invention may have the projection 170 and the groove 172 located below the lowermost O-ring channel 142. It is also conceivable that the projection 170 and the groove 172 could be located above the O-ring channel 142 of the second annular sealing disk 138.

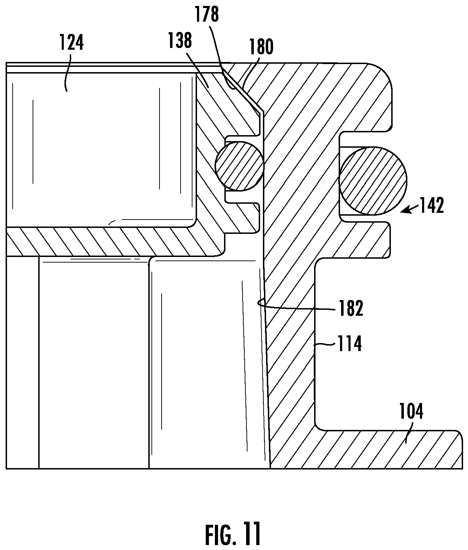

To protect against rotational movement of the top end cap 124 within the housing 104, a keying feature may be used. FIG. 11 is a cross-sectional view of the filter assembly 100 illustrating a keying feature, in accordance with an embodiment of the invention. In FIG. 11, the keying feature is provided by an angled portion 178 of the second annular sealing disk 138 is aligned with a similarly angled portion 180 of the third cylindrical portion 114 of the housing 104. As can be seen from FIG. 9, for most parts of the second annular sealing disk 138, an exterior sidewall 174 extends vertically to a top surface 176 such that the two surfaces meet at a right angle. FIG. 11 shows one relatively small part 178 of the second annular sealing disk 138 that is angled (for example at 45 degrees though other angles are possible) so as to create a notch or slot in the second annular sealing disk 138. The third cylindrical portion 114 has an inner sidewall 182 with an angled portion 180 (typically at the same angle as the sealing disk angled portion 178) configured to key or fit within the aforementioned notch in the second annular sealing disk 138. During assembly the two angled portions 178 and 180 are aligned such that the housing angled portion 180 is keyed within the notch in the second annular sealing disk 138 to prevent rotation of the top end cap 124 within the housing 104.

Further embodiments or aspects of the present disclosure are detailed in the following numbered clauses:
1. A filter assembly comprising: a housing and filter media disposed within the housing; a top end cap having an annular end plate attached to a top end of the filter media, and an axially-extending center tube, wherein the top end cap has a first opening configured to allow a flow of fluid into the housing, and has a second opening that provides a means for discharge of the flow of fluid from the housing.
2. The filter assembly of clause 1, wherein the second opening is formed in the center tube.
3. The filter assembly of clause 1, wherein the housing has an opening aligned with the second opening in the center tube.
4. The filter assembly of clause 3, wherein the second opening and the housing opening are of the same size and shape.
5. The filter assembly of clause 1, wherein the first opening is formed in an end wall which extends radially across a cross-section of the center tube, the end wall arranged perpendicularly to a longitudinal axis of the center tube and filter assembly.
6. The filter assembly of clause 5, wherein the first opening is arcuate in shape.
7. The filter assembly of clause 6, wherein an edge of the first opening is bounded by an inner surface of the center tube.
8. The filter assembly of clause 1, wherein the top end cap includes a first annular sealing disk attached to the center tube, and extending radially from the center tube, the first annular sealing disk spaced axially from the annular end plate.
9. The filter assembly of clause 8, wherein the first annular sealing disk has a smaller diameter than the annular end plate.
10. The filter assembly of clause 8, wherein the top end cap includes a second annular sealing disk attached to the center tube, and extending radially from the center tube, the second annular sealing disk spaced axially from the first annular sealing disk and from the annular end plate.
11. The filter assembly of clause 10, wherein the second annular sealing disk has a smaller diameter than the first annular sealing disk, which has a smaller diameter than the annular end plate.
12. The filter assembly of clause 11, wherein the first annular sealing disk and the second annular sealing disk are each configured to seal against an inner surface of the housing.
13. The filter assembly of clause 12, wherein the first annular sealing disk and the second annular sealing disk each have an O-ring channel configured to seat an O-ring.
14. The filter assembly of clause 1, wherein the housing is cylindrical with a main cylindrical portion having a first diameter, and a second cylindrical portion having a second diameter smaller than the first diameter.
15. The filter assembly of clause 14, wherein the housing has a third cylindrical portion having a third diameter smaller than the second diameter, wherein the second cylindrical portion is situated between the main cylindrical portion and the third cylindrical portion.
16. The filter assembly of clause 1, further comprising a bottom cover attached to an open end of the housing opposite an end of the housing in which the top end cap is assembled.
17. The filter assembly of clause 1, wherein the top end cap comprises an upper portion and a separate lower portion configured to be assembled into a single unit.
18. The filter assembly of clause 17, wherein the upper portion includes: an upper center tube; a first annular sealing disk attached to the upper center tube; and a second annular sealing disk axially offset from the first annular sealing disk, the second annular sealing disk attached to the upper center tube; and wherein the lower portion includes: a lower center tube that extends into an interior region of the filter media; and an annular end plate attached to an end of the filter media.
19. The filter assembly of clause 1, wherein the top end cap is configured such that the flow of fluid into the first opening is kept separate from the flow of fluid discharged from the second opening.
20. The filter assembly of clause 1, wherein the top end cap has an annular radially-outward-extending projection, which is formed around an outside perimeter surface of a first annular sealing disk, the first annular sealing disk being attached to the center tube, and extending radially from the center tube, the first annular sealing disk spaced axially from the annular end plate; and wherein an interior surface of the housing has an annular, radially-extending groove, the projection being configured to snap into the groove to limit axial movement of the top end cap within the housing.
21. The filter assembly of clause 1, wherein the top end cap has an annular sealing disk attached to the center tube, and extending radially from the center tube, the annular sealing disk having an angled, notched portion; wherein a portion of the housing that abuts the annular sealing disk has an angled portion configured to fit within the angled, notched portion to prevent rotation movement of the top end cap within the housing.
22. A filter element for a fluid filtration device, the filter element comprising: a. a ring of media; and b. an end cap assembly, the end cap assembly including: an annular end cap attached to an end of the ring of media, a center tube extending outwardly, away from the end cap, the center tube including a) an annular sealing disk surrounding a portion of the center tube along the length of the tube, and b) a circular end wall at a distal end of the center tube, projecting radially outwardly from the tube, wherein the center tube includes a) an axial opening extending from the distal end of the tube, through the circular end wall, through a wall of the center tube and through the sealing disk, and b) a radial opening through the center tube between the end wall and the sealing disk, fluidly separate from the axial opening.
23. The filter element of clause 22, further including a first O-ring seal carried by the sealing disk and surrounding an outer peripheral edge of the sealing disk, and a second O-ring seal carried by the end wall and surrounding an outer peripheral edge of the end wall.
24. A filter assembly including housing covers defining an outer housing, with one of the housing covers including a hollow stem with a first opening at a distal end of the stem, and a second opening along the length of the stem, and the filter element as in claim 23, the center tube of the filter element received within the stem of the one of the housing covers, with the O-ring seals of the disk and the end wall sealing against an inner wall surface of the stem and defining a first, inlet flow path into the outer housing through the axial opening, and a second flow path out of the housing through the radial opening.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter assembly comprising:
a housing and filter media disposed within the housing;
a top end cap having an annular end plate attached to a top end of the filter media, and an axially-extending center tube, wherein the top end cap has a first opening configured to allow a flow of fluid into the housing, and has a second opening that provides a means for discharge of the flow of fluid from the housing.

2. The filter assembly of claim 1, wherein the second opening is formed in the center tube.

3. The filter assembly of claim 2, wherein the housing has an opening aligned with the second opening in the center tube, and
wherein the second opening and the housing opening are of the same size and shape.

4. The filter assembly of any preceding claim, wherein the first opening is formed in an end wall which extends radially across a cross-section of the center tube, the end wall arranged perpendicularly to a longitudinal axis of the center tube and filter assembly.

5. The filter assembly of any preceding claim, wherein the first opening is arcuate in shape, and an edge of the first opening is bounded by an inner surface of the center tube.

6. The filter assembly of any preceding claim, wherein the top end cap includes a first annular sealing disk attached to the center tube, and extending radially from the center tube, the first annular sealing disk spaced axially from the annular end plate.

7. The filter assembly of claim 6, wherein the first annular sealing disk has a smaller diameter than the annular end plate.

8. The filter assembly of claim 6 or claim 7, wherein the top end cap includes a second annular sealing disk attached to the center tube, and extending radially from the center tube, the second annular sealing disk spaced axially from the first annular sealing disk and from the annular end plate.

9. The filter assembly of claim 8, wherein the second annular sealing disk has a smaller diameter than the first annular sealing disk, which has a smaller diameter than the annular end plate.

10. The filter assembly of claim 8 or claim 9, wherein the first annular sealing disk and the second annular sealing disk are each configured to seal against an inner surface of the housing.

11. The filter assembly of claim 10, wherein the first annular sealing disk and the second annular sealing disk each have an O-ring channel configured to seat an O-ring.

12. The filter assembly of any preceding claim, wherein the housing is cylindrical with a main cylindrical portion having a first diameter, a second cylindrical portion having a second diameter smaller than the first diameter, and a third cylindrical portion having a third diameter smaller than the second diameter, wherein the second cylindrical portion is situated between the main cylindrical portion and the third cylindrical portion.

13. The filter assembly of any preceding claim, further comprising a bottom cover attached to an open end of the housing opposite an end of the housing in which the top end cap is assembled.

14. The filter assembly of claim 1, wherein the top end cap comprises an upper portion and a separate lower portion configured to be assembled into a single unit.

15. The filter assembly of claim 14, wherein the upper portion includes:
an upper center tube;
a first annular sealing disk attached to the upper center tube; and
a second annular sealing disk axially offset from the first annular sealing disk, the second annular sealing disk attached to the upper center tube;
and wherein the lower portion includes:
a lower center tube that extends into an interior region of the filter media; and
an annular end plate attached to an end of the filter media.

16. The filter assembly of claim 1, wherein the top end cap is configured such that the flow of fluid into the first opening is kept separate from the flow of fluid discharged from the second opening.

17. The filter assembly of claim 1 or claim 16, wherein the top end cap has an annular radially-outward-extending projection, which is formed around an outside perimeter surface of a first annular sealing disk, the first annular sealing disk being attached to the center tube, and extending radially from the center tube, the first annular sealing disk spaced axially from the annular end plate; and
wherein an interior surface of the housing has an annular, radially-extending groove, the projection being configured to snap into the groove to limit axial movement of the top end cap within the housing.

18. The filter assembly of claim 1 or claim 16, wherein the top end cap has an annular sealing disk attached to the center tube, and extending radially from the center tube, the annular sealing disk having an angled, notched portion;
wherein a portion of the housing that abuts the annular sealing disk has an angled portion configured to fit within the angled, notched portion to prevent rotation movement of the top end cap within the housing.
